# EUROPÄISCHE PATENTSCHRIFT

(11) **EP 1 793 371 B1**
(45) Veröffentlichungstag und Bekanntmachung des Hinweises auf die Patenterteilung: **19.06.2013**
(21) Anmeldenummer: 06024276.5
(22) Anmeldetag: 23.11.2006
(51) Int. Cl.: G10L 15/26

(54) **Verfahren zur Spracherkennung**
Speech recognition method
Méthode pour la reconnaissance de la parole

(30) Priorität: 30.11.2005 US 290365
(43) Veröffentlichungstag der Anmeldung: 06.06.2007
(73) Patentinhaber: Volkswagen Aktiengesellschaft, 38440 Wolfsburg (DE); AUDI AG, 85045 Ingolstadt (DE)
(72) Erfinder: Gruchalski, Gerd, 85049 Ingolstadt (DE); Möhrle, Markus, 85051 Ingolstadt (DE); Prieto, Ramon Eduardo, Mountain View, California 94040 (US); Bergmann, Carsten, San Jose, California 95128 (US); Lathrop, William Brian, San Jose, California 95130 (US); Imam M., Kashif, New York, New York 10024 (US)

(56) Entgegenhaltungen:
- EP-A1- 1 162 602
- US-A1- 2004 059 575
- US-A1- 2004 076 279

## Beschreibung

Die Erfindung betrifft ein Verfahren zur Spracherkennung, bei dem eine Datenbank Information über geographische Namensbezeichnungen enthält und eine geographische Namensbezeichnung erkannt wird, indem eine Spracheingabe eines Benutzers verarbeitet wird.

Die europäische Patentschrift EP 0 768 638 B1 offenbart ein herkömmliches Spracherkennungssystem für ein in einem Auto installiertes Navigationssystem. Das Navigationssystem enthält einen Datenspeicher zum Speichern vom Straßenkartendaten, eine Erfassungseinrichtung zum Erfassen einer aktuellen Position des Autos und eine Anzeige zum Anzeigen einer Karte der Umgebung der erfassten aktuellen Position. Das Spracherkennungssystem ist konfiguriert, um geographische Namensbezeichnungen wie zum Beispiel die Namen von Landkreisen, Großstädten, Kleinstädten und Dörfern zu erkennen. Falls das Spracherkennungssystem konfiguriert ist, um eine große Anzahl an geografischen Namensbezeichnungen zu erkennen, dann steigt der rechentechnische Aufwand entsprechend an. Mit anderen Worten, um sicherzustellen, dass das Spracherkennungssystem eine geografische Namensbezeichnung innerhalb einer einigermaßen kurzen Zeit erkennen kann, muss die Anzahl der erkennbaren geografischen Namensbezeichnungen begrenzt werden.

Das in der europäischen Patentschrift EP 0 768 638 B1 offenbarte Spracherkennungssystem begrenzt die Anzahl der geografischen Namensbezeichnungen beispielsweise auf etwa 3500. Außerdem nehmen mit zunehmender Anzahl der Namensbezeichnungen, die das Spracherkennunssystem erkennen muss, die Möglichkeiten dafür zu, dass eine geografische Namensbezeichnung, die der gesprochenen Namensbezeichnung ähnlich ist, falsch erkannt wird. Mit anderen Worten, die Genauigkeit der Spracherkennungsergebnisse nimmt mit zunehmender Anzahl der erkennbaren geografischen Namensbezeichnungen ab.

Falls ein Spracherkennungssystem nicht nur Landkreise, Großstädte, Kleinstädte und Dörfer erkennen muss, sondern einzelne Straßen erkennen muss, dann kann die Anzahl der zu erkennenden geografischen Namensbezeichnungen auf weit über eine Million geografischer Namensbezeichnungen ansteigen. Herkömmliche Fahrzeugnavigationssysteme mit einem Spracherkennungssystem, das Zielorteingaben mittels Sprache erkennt, erzielen die oben beschriebenen Anforderungen bezüglich einer einigermaßen kurzen Erkennungszeit und einer einigermaßen hohen Erkennungsgenauigkeit, indem sie vom Benutzer verlangen, dass der Benutzer den Namen der Stadt alleine, d.h. getrennt vom Straßennamen, ausspricht. Das Spracherkennungssystem verarbeitet dann die Spracheingabe für die Stadt. Nachdem das Spracherkennungssystem die Stadt erkennt, verlangt das Spracherkennungssystem, das der Benutzer den Straßennamen ausspricht. In diesem Fall erkennt das Spracherkennungssystem die ausgesprochene Straße unter allen existierenden Straßen der Stadt, die erkannt worden ist. Die Anzahl der Straßen in der Stadt ist im allgemeinen nicht größer als ein paar tausend. Infolgedessen ist es für das Spracherkennungssystem möglich innerhalb einer ausreichend kurzen Zeit und mit einer ausreichenden Genauigkeit ein Erkennungsergebnis für eine ausgesprochene Straße zu liefern.

Ein Nachteil des oben beschriebenen Spracherkennungssystems ist, dass die Dialoginteraktion zwischen dem Spracherkennungssystem und dem Benutzer übermäßig ablenkend sein kann, da der Benutzer zuerst den Namen der Stadt aussprechen muss, dann muss der Benutzer warten bis das Spracherkennungssystem die Stadt erkennt und schließlich muss der Benutzer den Straßennamen aussprechen. Diese Art der Dialoginteraktion erfordert, dass der Benutzer seine Aufmerksamkeit auf das Spracherkennungssystem richtet, da der Benutzer den Straßennamen aussprechen muss nachdem das Spracherkennungssystem die ausgesprochene Stadt erkannt hat. Der Benutzer kann während der Fahrt beispielsweise genau dann aufgefordert werden den Straßennamen auszusprechen, wenn die volle Aufmerksamkeit des Benutzers dazu benötigt wird eine unvorhergesehene Fahrsituation zu beherrschen. Während einer derartigen Fahrsituation kann es sein, dass der Benutzer die Dialoginteraktion mit den Spracherkennungssystem als lästig und ärgerlich empfindet.

Spracherkennungssysteme, die vom Benutzer verlangen, dass gemäß der oben beschriebenen Dialoginteraktion getrennte Spracheingaben für die Stadt und die Straße gemacht werden, erhöhen die Arbeitsbelastung eines Benutzers, wenn er versucht eine Straße zu finden. Die Arbeitsbelastung für den Benutzer kann verringert werden, wenn das Spracherkennungssystem die Straßen, die erkannt werden können, auf die Straßen in der näheren Umgebung eines aktuellen Standorts des Benutzers oder Fahrzeugs beschränkt. In diesem Fall benötigt das Spracherkennungssystem keine Spracheingabe für die Stadt, da die erkennbaren Straßen auf der Grundlage des Standorts des Fahrzeugs ausgewählt werden. Die Anzahl der Straßen, die erkannt werden können, ist üblicherweise auf weniger als 5.000 Straßen beschränkt. Ein Nachteil einer Beschränkung der erkennbaren Straßen auf Straßen in der Nähe des aktuellen Standorts ist, dass der Benutzer möglicherweise nur eine bestimmte Straße in einer Stadt in der Umgebung des aktuellen Standorts des Benutzers anfordern kann, dass der Benutzer jedoch nicht eine Straße in einer Stadt, die weiter entfernt vom aktuellen Standort des Benutzers ist, anfordern kann.

Die EP 1 162 602 A1 beschreibt eine mehrstufige Spracherkennung, bei der in einer Spracheingabe ein Schlüsselwort erkannt wird und auf Basis des erkannten Schlüsselwortes das weiter zu durchsuchende Vokabular reduziert wird. Wird die Spracherkennung bei der Suche einer Strasse eingesetzt, kann es sich beim Schlüsselwort um eine zu einer Straße gehörige Straßentypinformation, z.B. "Strasse" oder "Gasse", handeln. Basierend auf dem erkannten Straßentyp wird die Spracheingabe in einem zweiten Schritt weiter analysiert, um die gesuchte Straße zu ermitteln.

Aufgabe der Erfindung ist ein Verfahren zur Spracherkennung zur Verfügung zu stellen, das die Dialoginteraktion für die Spracheingabe verbessert und das den Benutzer beim Fahren nicht ablenkt.

Insbesondere sollte das Verfahren zur Spracherkennung nicht derart beschränkt sein, dass nur eine Spracheingabe für große Gemeinden wie beispielsweise Städte erkannt wird, oder dass nur eine Spracheingabe für Straßen in nächster Nähe eines aktuellen Standorts erkannt wird.

Die vorgenannte Aufgabe wird gelöst durch ein Verfahren zur Spracherkennung mit den Merkmalen des Anspruchs 1, bei dem eine Datenbank Information über geographische Namensbezeichnungen enthält und eine geographische Namensbezeichnung erkannt wird, indem eine Spracheingabe verarbeitet wird, wobei die Datenbank Information über eine Vielzahl von Straßen enthält, wobei die Straßen jeweils durch einen Straßennamen und einen Straßentyp charakterisiert sind, wobei die Spracheingabe eine Straßennameninformation und eine Straßentypinformation enthält, wobei ein gegebener Straßentyp durch Verarbeiten der Spracheingabe erkannt wird, wobei Straßen mit dem gegebenen Straßentyp aus der Datenbank ausgewählt werden, und wobei ein Straßenname wenigstens einer der aus der Datenbank ausgewählten Straßen durch das Verarbeiten der Spracheingabe erkannt wird. Bei dem erfindungsgemäßen Verfahren wird eine Phonemerkennung für die Spracheingabe durchgeführt. Mindestens ein Phonem, das mit einem gegebenen Vertrauensniveau erkannt worden ist, wird ausgewählt. Der Straßenname wird durch einen Vergleich des mindestens einen mit dem gegebenen Vertrauensniveau erkannten Phonems mit Phonemen, die die in der Datenbank gespeicherten Straßen charakterisieren, erkannt.

Erfindungsgemäß wird ein aktueller Standort eines Fahrzeugs berechnet, es werden Straßen im Umkreis einer gegebenen Entfernung vom Fahrzeug ausgewählt, und Straßentyp und Straßenname nur der im Umkreis der gegebenen Entfernung liegenden Straßen werden erkannt.

In einer Ausgestaltung der Erfindung werden mehrere Straßennamen durch einen Vergleich des mindestens einen mit dem gegebenen Vertrauensniveau erkannten Phonems mit Phonemen, die die in der Datenbank gespeicherten Straßen charakterisieren, erkannt. Erkannte Straßen werden so ausgegeben, damit ein Benutzer eine der erkannten Straßen auswählen kann.

Erfindungsgemäß wird der Straßentyp erkannt bevor der Straßenname erkannt wird.

In einer weiteren Ausgestaltung der Erfindung wird die Spracheingabe als Datendatei gespeichert und der Straßentyp sowie der Straßenname werden durch eine Verarbeitung der Datendatei erkannt.

In einer weiteren Ausgestaltung der Erfindung werden der Straßentyp und der Straßenname erkannt, ohne dass eine Spracheingabe mit Information über eine Stadt notwendig ist.

In einer weiteren Ausgestaltung der Erfindung wird für jeden Abschnitt einer die Spracheingabe repräsentierende Sprachwellenform eine Phonemerkennung durchgeführt, und es werden Straßen ausgewählt, die mindestens ein mit einem gegebenen Vertrauensniveau erkanntes Phonem haben.

Die vorgenannte Aufgabe wird weiterhin gelöst durch ein Verfahren zum Finden von Information in einer Datenbank mittels des erfindungsgemäßen Verfahrens zur Spracherkennung.

Der Aufbau und das Verfahren zum Betreiben der Erfindung sowie weitere Aufgaben und Vorteile der Erfindung ergeben sich aus der nachfolgenden Beschreibung einzelner Ausführungsformen in Kombination mit den Zeichnungen.
Fig. 1 zeigt ein Ablaufdiagramm zur Veranschaulichung der Verfahrensschritte einer exemplarischen Spracherkennung;
Fig. 2 zeigt ein Ablaufdiagramm mit einer Übersicht über die Hauptschritte eines weiteren exemplarischen zur Spracherkennung; und
Fig. 3 zeigt eine schematische Darstellung zur Erläuterung einer Datenbankreduzierung.

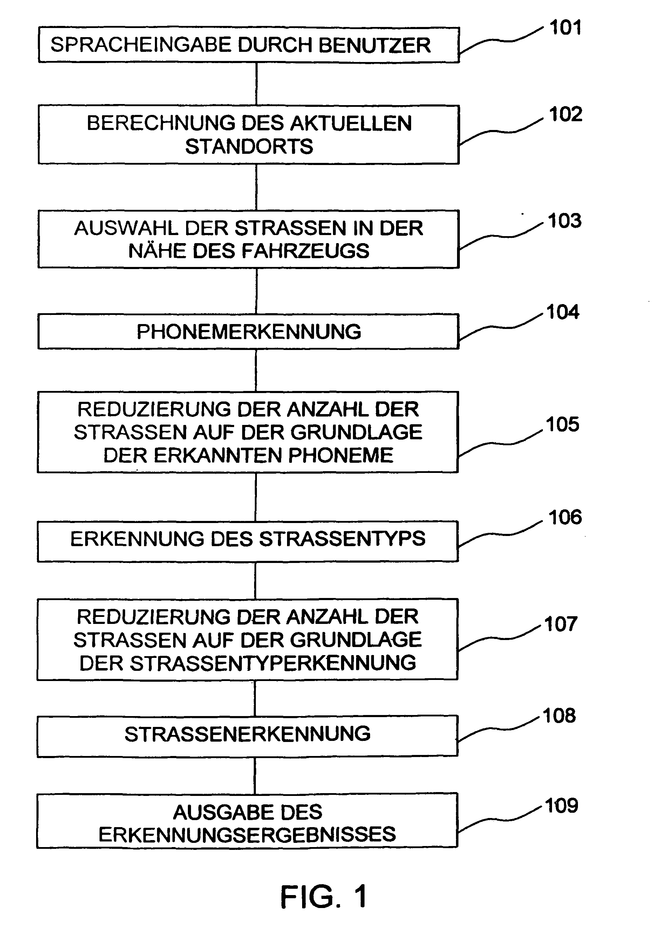

Im Detail zeigt Fig. 1 ein Ablaufdiagramm, das die Verfahrensschritte veranschaulicht, die ausgeführt werden, wenn ein Benutzer eine bestimmte Straße finden will. In dem Beispiel, das dargestellt ist, wird angenommen, dass sich ein Benutzer in einem mit einem Fahrzeugnavigationssystem ausgestatteten Fahrzeug befindet, wobei das Fahrzeugnavigationssystem ein Spracherkennungssystem aufweist. Falls der Benutzer zur "Del Medio Avenue" fahren will, wird der Benutzer "Del Medio Avenue" sagen, um eine Spracheingabe zu machen, wie dies im Schritt 101 angegeben ist.

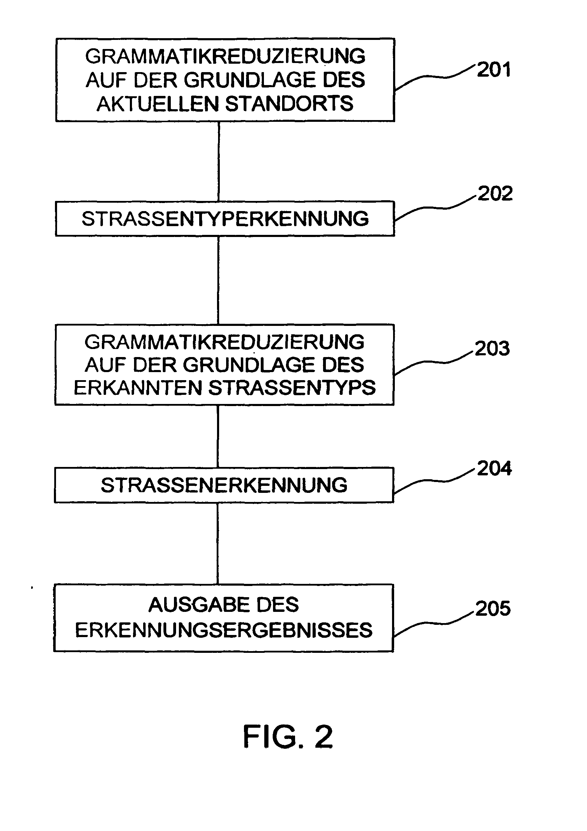

Das Fahrzeugnavigationssystem berechnet eine aktuelle Position des Fahrzeugs, wie dies im Schritt 102 angegeben ist. Auf der Grundlage der aktuellen Position des Fahrzeugs, wählt das Spracherkennungssystem eine Anzahl von Straßen aus, die dem Fahrzeug am nächsten sind, wie im Schritt 103 in Fig. 2 angegeben ist. Abhängig von einer gegebenen Genauigkeitsschwelle, beträgt die Anzahl der nächstliegenden Straßen, d.h. in unmittelbarer Nähe befindlicher Straßen, beispielsweise 50.000 oder 100.000. Straßen, die nicht in die Kategorie der nächstliegenden Straßen fallen, werden als vom Fahrzeug entfernt liegende Straßen betrachtet. Diese Auswahl der nächstliegenden Straßen wird vorzugsweise als eine dynamische, standortsbezogene Straßendatenbankabfrage durchgeführt.

Im Schritt 104 führt das Spracherkennungssystem eine Phonemerkennung zur Erkennung des Satzes durch, der vom Benutzer ausgesprochen wurde. Als Ergebnis liefert das Spracherkennungssystem die Phoneme, die mit dem höchsten Vertrauen, bzw. Vertrauensniveau, erkannt worden sind. Die Phoneme mit dem höchsten Vertrauen können beispielsweise sein: "d" gefolgt von "m" gefolgt von "d" gefolgt von "n".

Das Spracherkennungssystem schließt dann alle Straßen aus, die nicht die Phoneme "d, m, d, n" in dieser Reihenfolge aufweisen. Schritt 105 zeigt diese Reduzierung der Straßen auf der Grundlage des Ergebnisses der Phonemerkennung. Infolgedessen bleiben unter Umständen weniger als 10.000 Straßen übrig, beispielsweise können 8.000 Straßen übrig bleiben nachdem sowohl die standortsbezogene Reduzierung der Anzahl der Straßen als auch die phonembezogene Reduzierung der Anzahl der Straßen durchgeführt worden ist.

Im nachfolgenden Schritt 106 führt das Spracherkennungssystem eine Erkennung des Straßentyps im ausgesprochenen Satz durch. In der Straßentyperkennungsstufe, befasst sich das Spracherkennungssystem nicht mit dem Namen der Straße. Beim Beispiel "Del Medio Avenue" befasst sich Schritt 106 nicht mit der Erkennung des Straßennamens "Del Medio" sondern der Schritt 106 wird nur versuchen den Straßentyp "Avenue" zu erkennen. Im Schritt 106 unterscheidet das Spracherkennungssystem nur zwischen Straßentypen, d.h. das Spracherkennungssystem wird nur versuchen zwischen Wörtern zu unterscheiden, die auf einen Straßentyp hinweisen, im Englischen beispielsweise "Avenue", "Road", "Street", "Court", "Circle" usw. oder im Deutschen beispielsweise "Allee", "Straße", "Gasse", "Hof", "Platz". Der Schritt, bei dem der Straßentyp erkannt wird, erfordert, dass ein Straßentyp aus nur etwa 200 verschiedenen Straßentypen erkannt wird. Dies ermöglicht eine schnelle und genaue Erkennung des Straßentyps. Wenn der Benutzer "Del Medio Avenue" ausgesprochen hat, dann wird eine erfolgreich ausgeführte Straßentyperkennung das Word "Avenue" erkennen.

In einem weiteren Schritt 107, schließt das Spracherkennungssystem alle Straßen aus, die nicht das Wort "Avenue" enthalten. Falls, wie im oben angegebenen Beispiel, nach der Reduzierung der Zahl der Straßen auf der Grundlage des Standorts und auf der Grundlage der Phoneme, die Anzahl der Straßen 8.000 beträgt, dann kann die Anzahl der Straßen nach der Straßentyperkennung nur mehr etwa 1.000 betragen.

Im Schritt 108 führt das Straßenerkennungssystem eine Straßenerkennung unter den Straßen durch, die nach der Eliminierung der Straßen übrig bleiben, die einen Straßentyp haben, der sich vom erkannten Straßentyp unterscheidet. Die Straßenerkennung des Schritts 108 wird dann beispielsweise mit 1.000 Straßen durchgeführt. Im Schritt 109 liefert das Spracherkennungssystem das Erkennungsergebnis entweder durch eine Sprachausgabe an den Benutzer, die dem Benutzer die richtig erkannte Straße "Del Medio Avenue" mitteilt, oder es zeigt die besten Übereinstimmungsergebnisse auf einem Bildschirm an, damit der Benutzer eine der angezeigten Straßen auswählen kann.

Die Hauptelemente eines weiteren Verfahrens zur Spracherkennung werden ferner mit Bezug auf Fig. 2 erklärt. In einem ersten Hauptschritt 201 wird eine standortbezogene Grammatikreduzierung durchgeführt, indem Straßen eliminiert werden, die sich weit entfernt vom aktuellen Standort befinden, und indem Straßen ausgewählt werden, die sich in der Nähe des aktuellen Standorts befinden. Schritt 201 führt nur eine sehr geringfügige Reduzierung der für die Spracherkennung zur Verfügung stehenden Straßen auf der Grundlage des aktuellen Standorts durch. Schritt 201 behält beispielsweise etwa 50.000 bis 100.000 Straßen in der Grammatik im Gegensatz zu einer Reduzierung der Anzahl der Straßen auf nur etwa 1.000 bis 5.000 wie dies bei herkömmlichen standortbezogenen Grammatikreduzierungen von Spracherkennungsverfahren der Fall ist.

In einem nachfolgenden Schritt 202 führt das Spracherkennungs verfahren eine Straßentyperkennung durch. In diesem Schritt erkennt das Spracherkennungsverfahren die Wörter, die einen Straßentyp repräsentieren, wie beispielsweise "Road", "Way" und "Avenue". Es gibt nur etwa 200 verschiedene Straßentypen und deshalb kann die Erkennung des Straßentyps innerhalb einer kurzen Zeitdauer und mit einer ausreichend hohen Genauigkeit ausgeführt werden. Um den Straßentyp zu erkennen, verarbeitet die Spracherkennung eine gespeicherte Sprachwellenform der Spracheingabe des Benutzers.

Nach dem Erkennen des Typs der Straße, der ausgesprochen wurde, führt das Spracherkennungsverfahren Schritt 203 durch, um die Grammatik weiter zu reduzieren, und zwar auf nur die Straßen, die den erkannten Straßentyp enthalten, d.h. Straßen, die einen anderen als den erkannten Straßentyp haben, werden von einer weiteren Spracherkennung ausgeschlossen.

Das Spracherkennungsverfahren führt eine Phonemerkennung für jeden Abschnitt der gespeicherten Sprachwellenform durch und reduziert die Grammatik auf die Straßen, die Phoneme mit dem höchsten Vertrauensmaß (Konfidenz) in ihrer phonetischen Transkription aufweisen.

Im Schritt 204 führt das Spracherkennungsverfahren eine Straßenerkennung nur für die Straßen durch, die zu dem erkannten Straßentyp passen, und nur für die, die zu den Phonemen mit dem höchsten Vertrauensmaß passen.

In Abhängigkeit von statistischen Schwellen, wird entweder das beste Übereinstimmungsergebnis als Erwiderung in Form einer Sprachausgabe an den Benutzer gegeben oder mehrere der besten Übereinstimmungsergebnisse werden auf einem Bildschirm angezeigt. Schritt 205 zeigt die Ausgabe des Spracherkennungsergebnisses an den Benutzer. Der Benutzer kann dann eines der besten Übereinstimmungsergebnisse durch eine Spracheingabe, durch Berühren eines Bildschirms oder durch ein anderes Auswahlverfahren auswählen.

Spezifische Merkmale des Spracherkennungsverfahrens sind, dass es eine Phonemerkennung für jeden Abschnitt der Sprachwellenform ausführt. Das Spracherkennungsverfahren reduziert die Grammatik auf die Straßen, die die Phoneme mit dem höchsten Vertrauensmaß (Konfidenz) in ihrer phonetischen Transkription aufweisen. Das Spracherkennungssystem führt eine Straßentyperkennung durch, d.h. es erkennt die Wörter "Road", "Way", "Avenue" usw. beziehungsweise im deutschsprachigen Anwendungsfall "Straße", "Weg", "Allee" usw. anhand der gleichen Sprachwellenform anhand derer es den Straßennamen z.B. "Del Medio" erkennt. Nach dem Erkennen des Straßentyps der Straße, die der Benutzer ausgesprochen hat, reduziert das Spracherkennungsverfahren die Grammatik weiter auf nur die Straßen, die den erkannten Straßentyp enthalten.

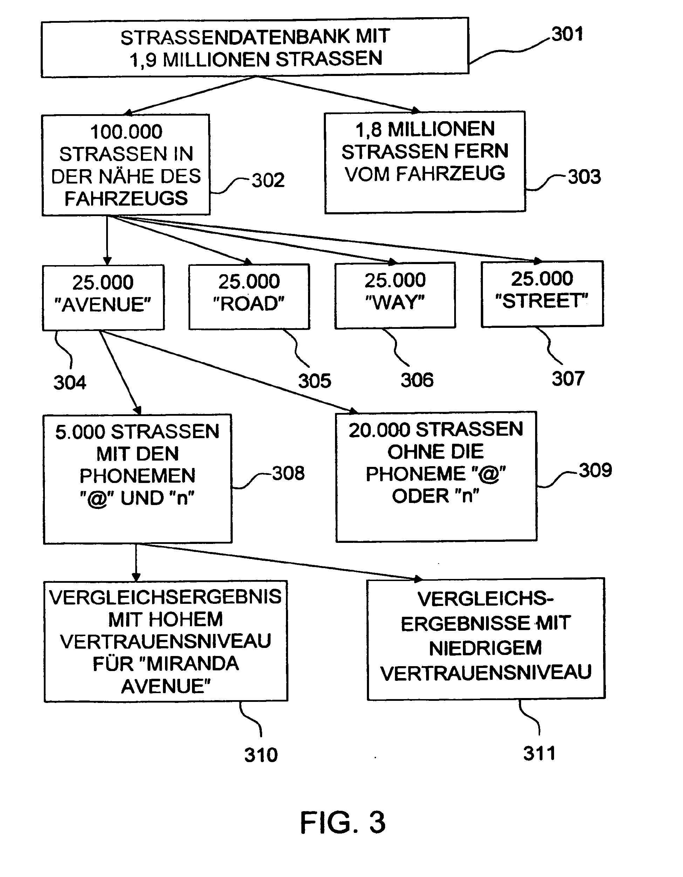

Fig. 3 ist eine schematische Übersicht, die eine Datenbankreduzierung veranschaulicht. Das Spracherkennungssystem hat eine große Datenbank 301, die alle Straßen enthält, die der Benutzer mit einer Spracheingabe an das Spracherkennungssystem möglicherweise finden will. Beim vorliegenden Beispiel enthält die Datenbank 1,9 Millionen Straßen. Die Gesamtzahl der Straßen in der Datenbank ist selbstverständlich von der geografischen Fläche abhängig, die abgedeckt wird. Um die Anzahl der Straßen, die für die Spracherkennung zur Verfügung stehen, zu reduzieren führt das Spracherkennungssystem eine auf dem Standort basierende Reduzierung der Straßen durch, indem die Straßen in der Nähe des Fahrzeugstandorts ausgewählt werden. Der Kasten 302 stellt die Straßen in der Nähe des Fahrzeugstandorts dar und der Kasten 303 stellt die Straßen dar, die weit entfernt vom Fahrzeugstandort sind. Im vorliegenden Fall wählt das Spracherkennungssystem beispielsweise 100.000 Straßen aus, die nahe am Standort des Fahrzeugs sind, womit 1.8 Millionen Straßen übrig bleiben, die als weit entfernt vom Fahrzeugstandort eingestuft werden.

Die Straßendatenbank 302, die die Straßen in der Nähe des Standorts des Fahrzeugs enthält, wird durch eine Erkennung des Straßentyps reduziert. Als Beispiel veranschaulicht Fig. 3 den Straßentyp "Avenue" im Kasten 304, der beispielsweise 25.000 Straßen mit dem Straßentyp "Avenue" enthält, den Straßentyp "Road" im Kasten 305 mit 25.000 Straßen mit dem Straßentyp "Road", den Straßentyp "Way" im Kasten 306 mit 25.000 Straßen mit dem Straßentyp "Way" und den Straßentyp "Street" im Kasten 307 mit 25.000 Straßen mit dem Straßentyp "Street". Es gibt nur etwa 200 verschiedene Straßentypen. Wenn beispielsweise der Benutzer die "Miranda Avenue" finden will, dann wird die Straßendatenbank auf die Straßen reduziert, die den Straßentyp "Avenue" aufweisen, wie dies in durch den Kasten 304 angedeutet ist.

Die nächste Reduzierung der Straßendatenbank geschieht auf der Grundlage einer Phonemerkennung. Die Englische Sprache hat beispielsweise nur etwa 50 verschiedene Phoneme. Die phonetische Transkription des Wortes "Miranda" kann als "m@ r{n d@" ausgeschrieben werden. Die Spracherkennung wählt die Phoneme mit dem höchsten Vertrauensmaß aus, wie dies mit dem Kasten 308 angedeutet ist, und schließt die Phoneme mit einem niedrigen Vertrauensniveau aus, wie dies durch den Kasten 309 angedeutet ist. Im vorliegenden Beispiel führt die Reduzierung zu 5.000 Straßen, die die Phoneme "@" und "n" enthalten, was darauf hindeutet, dass "Miranda" in diesen 5.000 Straßen vorkommt. Die übrigen 20.000 Straßen, die nicht die Phoneme "@" oder "n" enthalten, werden eliminiert.

Schließlich führt das Spracherkennungssystem eine Straßenerkennung durch, um das endgültige Ergebnis zu erhalten. Die Straßenerkennung schließt Übereinstimmungsergebnisse mit einem niedrigen Vertrauensmaß aus, wie dies mit dem Kasten 311 angedeutet wird, und liefert, wie dies mit dem Kasten 310 angedeutet wird, dem Benutzer das beste Übereinstimmungsergebnis oder eine Anzahl der besten Übereinstimmungsergebnisse entweder als Sprachausgabe oder auf einer Anzeige, damit der Benutzer das Erkennungsergebnis bestätigen kann oder eines der besten Übereinstimmungsergebnisse auswählen kann.

Ein Vorteil eines Spracherkennungsverfahrens, das die oben beschriebene Zieleingabe verwendet, bei der die Straße zuerst eingegeben wird, ist, dass der Benutzer nur einmal sprechen muss. Beispielsweise sagt der Benutzer nur "Miranda Avenue". Das Spracherkennungssystem speichert die Benutzerspracheingabe für "Miranda Avenue" als Wellenformdatei ab und verarbeitet die Spracheingabe, ohne dass eine weitere Dialoginteraktion notwendig ist. Im Gegensatz dazu wird bei herkömmlichen Systemen zuerst eine Spracheingabe für eine Stadt benötigt und, nachdem die Spracheingabe für die Stadt verarbeitet ist, wird eine zusätzliche Spracheingabe für die Straße benötigt. Ein weiterer Vorteil des Spracherkennungsverfahrens gemäß der Erfindung ist, dass die Straßen, die abgerufen werden können, nicht auf eine bestimmte Stadt begrenzt sind oder auf Städte begrenzt sind, die an einen aktuellen Standort angrenzen. Stattdessen kann die Zahl der Straßen, die in der Umgebung eines aktuellen Standorts liegen, beispielsweise 50.000 bis 100.000 Straßen umfassen.

### Bezugszeichenliste

| | |
|---|---|
| 101, 102, 103, 104, 105 | Verfahrensschritte der Spracherkennung |
| 106, 107, 108, 109 | Verfahrensschritte der Spracherkennung |
| 201, 202, 203, 204, 205 | Hauptverfahrensschritte der Spracherkennung |
| 301 | Straßendatenbank |
| 302, 303 | Straßeneinteilung nach Standort |
| 304, 305, 306, 307 | Straßeneinteilung nach Straßentyp |
| 308, 309 . | Straßeneinteilung nach Phonemerkennung |
| 310, 311 | Straßeneinteilung nach Vertrauensniveau der Phonemerkennung |

## Patentansprüche

1. Verfahren zur Spracherkennung, bei dem eine Datenbank Information über geographische Namensbezeichnungen enthält und eine geographische Namensbezeichnung erkannt wird, indem eine Spracheingabe verarbeitet wird, wobei die Datenbank Information über eine Vielzahl von Straßen enthält, wobei die Straßen jeweils durch einen Straßennamen und einen Straßentyp charakterisiert sind, wobei die Spracheingabe eine Straßennameninformation und eine Straßentypinformation enthält, wobei ein gegebener Straßentyp durch Verarbeiten der Spracheingabe erkannt wird, wobei Straßen mit dem gegebenen Straßentyp aus der Datenbank ausgewählt werden, und wobei ein Straßenname wenigstens einer der aus der Datenbank ausgewählten Straßen durch das Verarbeiten der Spracheingabe erkannt wird, wobei der Straßentyp erkannt wird, bevor der Straßenname erkannt wird,
**dadurch gekennzeichnet, dass**
ein aktueller Standort eines Fahrzeugs berechnet wird, dass Straßen im Umkreis einer gegebenen Entfernung vom Fahrzeug ausgewählt werden, dass Straßentyp und Straßenname nur der im Umkreis der gegebenen Entfernung liegenden Straßen erkannt werden und dass eine Phonemerkennung für die Spracheingabe durchgeführt wird und mindestens ein Phonem, das mit einem gegebenen Vertrauensniveau erkannt worden ist, ausgewählt wird, und dass der Straßenname durch einen Vergleich des mindestens einen mit dem gegebenen Vertrauensniveau erkannten Phonems mit Phonemen, die die in der Datenbank gespeicherten Straßen charakterisieren, erkannt wird.

2. Verfahren nach Anspruch 1, **dadurch gekennzeichnet, dass** mehrere Straßennamen durch einen Vergleich des mindestens einen mit dem gegebenen Vertrauensniveau erkannten Phonems mit Phonemen, die die in der Datenbank gespeicherten Straßen charakterisieren, erkannt werden, und dass erkannte Straßen so ausgegeben werden, dass von einem Benutzer eine der erkannten Straßen auswählbar ist.

3. Verfahren nach wenigstens einem der vorhergehenden Ansprüche, **dadurch gekennzeichnet, dass** die Spracheingabe als Datendatei gespeichert wird und der Straßentyp sowie der Straßenname durch eine Verarbeitung der Datendatei erkannt werden.

4. Verfahren nach wenigstens einem der vorhergehenden Ansprüche, **dadurch gekennzeichnet, dass** der Straßentyp und der Straßenname erkannt werden, ohne dass eine Spracheingabe mit Information über eine Stadt notwendig ist.

5. Verfahren nach wenigstens einem der vorhergehenden Ansprüche, **dadurch gekennzeichnet, dass** für jeden Abschnitt einer die Spracheingabe repräsentierenden Sprachwellenform eine Phonemerkennung durchgeführt wird und Straßen ausgewählt werden, die mindestens ein mit einem gegebenen Vertrauensniveau erkanntes Phonem haben.

6. Verfahren zum Finden von Information in einer Datenbank mittels eines Verfahrens nach einem der vorherigen Ansprüche.

## Claims

1. Method for voice recognition, in which a database contains information about geographical name labels and a geographical name label is recognized by processing a voice input, wherein the database contains information about a multiplicity of roads, wherein the roads are each **characterized by** a road name and a road type, wherein the voice input contains a piece of road name information and a piece of road type information, wherein a given road type is recognized by processing the voice input, wherein roads having the given road type are selected from the database and wherein a road name for at least one of the roads selected from the database is recognized by processing the voice input, the road type being recognized before the road name is recognized,
**characterized in that**
a current location for a vehicle is calculated, **in that** roads within a radius of a given distance from the vehicle are selected, **in that** the road type and road name of only those roads which are within the radius of the given distance are recognized and
**in that** phoneme recognition is performed for the voice input and at least one phoneme which has been recognized with a given level of confidence is selected, and **in that** the road name is recognized by comparing the at least one phoneme recognized with the given level of confidence with phonemes which characterize the roads stored in the database.

2. Method according to Claim 1, **characterized in that** a plurality of road names are recognized by comparing the at least one phoneme recognized with the given level of confidence with phonemes which characterize the roads stored in the database, and **in that** recognized roads are output such that a user can select one of the recognized roads.

3. Method according to at least one of the preceding claims, **characterized in that** the voice input is stored as a data file and the road type and also the road name are recognized by processing the data file.

4. Method according to at least one of the preceding claims, **characterized in that** the road type and the road name are recognized without the need for a voice input with information about a city.

5. Method according to at least one of the preceding claims, **characterized in that** phoneme recognition is performed for each section of a voice waveform representing the voice input, and roads are selected which have at least one phoneme recognized with a given level of confidence.

6. Method for finding information in a database using a method according to one of the preceding claims.

## Revendications

1. Procédé de reconnaissance vocale dans lequel une base de données contient des informations sur des dénominations géographiques et une dénomination géographique est reconnue en traitant une entrée vocale,
la base de données contenant des informations sur plusieurs rues, les rues étant chacune **caractérisée par** un nom de rue et un type de rue, l'introduction vocale contenant une information sur le nom de rue et une information sur le type de rue, un type de rue donné étant détecté par traitement de l'introduction vocale, des rues présentant le type de rue donné étant sélectionnées dans la base de données et un nom de rue d'au moins une rue sélectionnée dans la base de données étant détecté par traitement de l'introduction vocale, le type de rue étant reconnu avant le nom de rue, **caractérisé en ce que**
la localisation présente d'un véhicule est calculée,
**en ce que** les rues sont sélectionnées dans l'environnement qui s'étend jusqu'à une distance donnée du véhicule,
**en ce que** le type de rue et le nom de rue ne sont reconnus que pour les rues situées dans l'environnement s'étendant jusqu'à une distance donnée,
**en ce qu'**une reconnaissance de phonème de l'introduction vocale est exécutée,
**en ce qu'**au moins un phonème qui a été reconnu avec un niveau de confiance donné est sélectionné et
**en ce que** le nom de rue est reconnu par comparaison du ou des phonèmes détectés au moins avec le niveau de confiance donné avec des phonèmes qui caractérisent les rues conservées en mémoire dans la base de données.

2. Procédé selon la revendication 1, **caractérisé en ce que** plusieurs noms de rue sont reconnus par comparaison du ou des phonèmes reconnus avec le niveau de confiance donné avec des phonèmes qui caractérisent les rues conservées en mémoire dans la base de données et **en ce que** les rues reconnues sont présentées de manière à permettre à l'utilisateur de sélectionner une des rues reconnues.

3. Procédé selon au moins l'une des revendications précédentes, **caractérisé en ce que** l'introduction vocale est conservée en mémoire sous la forme d'un fichier de données et **en ce que** le type de rue ainsi que le nom de rue sont reconnus par un traitement du fichier de données.

4. Procédé selon au moins l'une des revendications précédentes, **caractérisé en ce que** le type de rue et le nom de rue sont reconnus sans que l'introduction vocale doive contenir des informations concernant une ville.

5. Procédé selon au moins l'une des revendications précédentes, **caractérisé en ce qu'**une reconnaissance de phonème est exécutée pour chaque section d'une forme d'onde vocale qui représente l'introduction vocale et **en ce que** les rues sélectionnées sont celles qui présentent au moins un phonème reconnu avec le niveau de confiance donné.

6. Procédé de recherche d'informations dans une base de données au moyen d'un procédé selon l'une des revendications précédentes.
